# EUROPÄISCHE PATENTANMELDUNG

(11) **EP 2 891 933 A1**
(43) Veröffentlichungstag der Anmeldung: **08.07.2015**
(21) Anmeldenummer: 14186592.3
(22) Anmeldetag: 26.09.2014
(51) Int. Cl.: G05B 19/042, G05B 15/02

(54) **Regelungseinheit für ein Heizsystem mit kommunikationsgesteuertem, stromsparendem Modus, sowie Verfahren zum Steuern oder Regeln einer Regelungseinheit**

(30) Priorität: 11.10.2013 DE 102013220580
(71) Anmelder: ROBERT BOSCH GMBH, 70442 Stuttgart (DE)
(72) Erfinder: Berger, Christian, 35625 Huettenberg (DE); Langer, Daniel, 35415 Pohlheim (DE)

(57) **Zusammenfassung**

Die Erfindung betrifft eine Regelungseinheit für ein Heizsystem, die mindestens eine Steuerungseinheit und eine erste Übersetzungseinheit umfasst, wobei die Steuerungseinheit und/oder die erste Übersetzungseinheit mit einer zweiten Übersetzungseinheit verbunden sind. Es wird vorgeschlagen, dass zumindest die zweite Übersetzungseinheit wenigstens bereichsweise in einen stromsparenden Modus oder in einen Normalmodus bringbar ist.

## Beschreibung

Die Erfindung betrifft eine Regelungseinheit für ein Heizsystem nach dem Oberbegriff des Anspruchs 1, die mindestens eine Steuerungseinheit und eine erste Übersetzungseinheit umfasst, wobei die Steuerungseinheit und/oder die erste Übersetzungseinheit mit einer zweiten Übersetzungseinheit verbunden sind.

### Stand der Technik

Bekannt aus dem Stand der Technik ist die kabellose Steuerung von Geräten, zum Beispiel von Haushaltsgeräten, über weite Entfernungen hinweg, beispielsweise mit einem stationären oder mobilen Sende- und Empfangsgerät, wie einem Mobilfunkgerät oder einem Computer, die an ein öffentliches Netzwerk, wie zum Beispiel dem Internet oder einem beliebigen Server, angeschlossen werden können. Zunehmend wird diese Technologie auch auf Heizungsanlagen angewandt, wie beispielsweise in der DE 20 2009 002 866 U1 offenbart. Hier wird ein System zur zentralen Regelung einer Heizung beschrieben, wobei eine Zentralsteuereinheit kommunikativ mit mindestens einer Steuereinheit zum Übertragen und Empfangen von Signalen verbunden ist. Hierdurch sind beispielsweise eine Bedienung des Wärmeerzeugers aus der Ferne möglich, wie auch eine Benachrichtigung im Störungsfall, eine Fernwartung oder eine Regelung anhand von Wetterdaten aus dem Internet.

Derartig geregelte Heizungsanlagen werden immer komplexer; unter anderem werden diese zunehmend mit Komponenten ausgestattet, die einen Fernzugriff auf die Heizungsanlage ermöglichen. Dadurch entsteht auch ein höherer Stromverbrauch, was mit Hinblick auf die gegenwärtig zunehmende Wichtigkeit von Energieeffizienz nicht mehr tolerabel ist.

### Offenbarung der Erfindung

Die erfindungsgemäße Regelungseinheit für ein Heizsystem mit den Merkmalen des Hauptanspruchs hat den Vorteil, dass die Regelungseinheit über mindestens eine Steuerungseinheit und eine erste Übersetzungseinheit verfügt, wobei die Steuerungseinheit und/oder die erste Übersetzungseinheit mit einer zweiten Übersetzungseinheit verbunden sind. Dabei ist zumindest die zweite Übersetzungseinheit wenigstens bereichsweise in einen stromsparenden Modus oder in einen Normalmodus bringbar.

Hierbei ist unter einer Regelungseinheit für ein Heizsystem eine Einheit zur Regelung und Steuerung eines Heizsystems zu verstehen. Eine Steuerungseinheit ist als ein Teil der Regelungseinheit definiert, welches mit verschiedenen Teilen der Regelungseinheit verbunden ist, mit diesen kommunizieren und an diese Befehle senden kann. Diese werden dann an die Regelungseinheit weitergeleitet und können von dieser ausgeführt werden. Eine Übersetzungseinheit ist ein Teil oder eine Software, welche eine Kommunikation zwischen Steuerungseinheit, Regelungseinheit und/oder einem externen Netz ermöglicht. Auch die erste und die zweite Übersetzungseinheit sind Teile der Regelungseinheit. Die Steuerungseinheit, die erste und die zweite Übersetzungseinheit und die Regelungseinheit stellen eine Einheit dar. Dabei kann es sich beispielsweise um eine bauliche Einheit handeln. Aber auch die Gesamtheit der einzelnen Teile bildet diese Einheit.

Unter einem Normalmodus ist der Modus zu verstehen, in dem ein Gerät funktionsfähig ist und hierfür bis hin zu einer maximalen Energie benötigt, wobei unter einem stromsparenden Modus ein Zustand zu verstehen ist, in dem einige Funktionen des Gerätes deaktiviert sind und das Gerät weniger Energie benötigt als im Normalmodus. Durch die in den Unteransprüchen aufgeführten Merkmale sind vorteilhafte Weiterbildungen der erfindungsgemäßen Regelungseinheit für ein Heizsystem nach dem Hauptanspruch möglich.

Die zweite Übersetzungseinheit kann sich in dem stromsparenden Modus, dem Normalmodus oder in einem Schlafmodus befinden. Dabei ist unter einem Schlafmodus ein Modus zu verstehen, in welchem die zweite Übersetzungseinheit einen minimalen Energieverbrauch aufweist, das heißt, der Energieverbrauch ist niedriger als im stromsparenden Modus. Desweiteren sind im Schlafmodus nur Funktionen der zweiten Übersetzungseinheit aktiv, welche wirklich benötigt werden und sehr wenig Energie verbrauchen, beispielsweise für eine Überwachungsfunktion; alle anderen Funktionen sind deaktiviert. Dabei kann die zweite Übersetzungseinheit durch ein Aufweck- oder Einschlafsignal zwischen dem Schlafmodus, dem stromsparenden Modus und dem Normalmodus wechseln. Unter einem Aufwecksignal wird ein Signal verstanden, welches die Information beinhaltet, ob von einem Schlafmodus oder einem stromsparenden Modus in einen Normalmodus gewechselt werden soll. Unter einem Einschlafsignal wird ein Signal verstanden, welches den Wechsel vom Normalmodus in den Schlafmodus oder in den stromsparenden Modus veranlasst. Dies hat den Vorteil, dass Energie nur für solche Funktionen gebraucht wird, die tatsächlich benutzt werden.

Die zweite Übersetzungseinheit kann sich in einem Schlafmodus befinden und durch ein Aufwecksignal in den Normalmodus oder in den stromsparenden Modus versetzt werden. Solange nicht der Normalmodus benötigt wird, bleibt die zweite Übersetzungseinheit im Schlafmodus oder stromsparenden Modus. Dies ist zum einen deshalb vorteilhaft, da Energie nur für Funktionen gebraucht wird, die auch wirklich verwendet werden. Zum anderen erlaubt der Wechsel zwischen den drei Modi einen optimalen Energiehaushalt und eine optimale Energieeinsparung in Abhängigkeit von tatsächlichem Gebrauch und Bedarf.

Wenn die gesamte Regelungseinheit in einen stromsparenden Modus gebracht und in einen Normalmodus versetzt werden kann, hat dies den Vorteil, dass weiter Energie eingespart werden kann.

Die zweite Übersetzungseinheit kann sich innerhalb der Regelungseinheit befinden. So kann die Regelungseinheit für die Heizungsanlage gleich mit der zweiten Übersetzungseinheit versehen sein, was eine kompakte Anlage ergibt, die bereits mit allen nötigen Komponenten zur kabellosen Kommunikation mit einem externen Netz ausgestattet ist, was ein hohes Maß an Kundenfreundlichkeit bietet.

Dabei ist es auch ein Vorteil, wenn sich die zweite Übersetzungseinheit als Teil der Regelungseinheit außerhalb der Regelungseinheit befinden kann, beispielsweise außerhalb des Gehäuses des Wärmeerzeugers. Dabei bilden die zweite Übersetzungseinheit als ein Teil der Regelungseinheit und die Regelungseinheit weiterhin eine Einheit. So lassen sich auch Regelungseinheiten, die noch nicht über eine zweite Übersetzungseinheit verfügen, mit einer solchen erweitern, so dass auch hier ein Fernzugriff auf die Heizungsanlage, beispielsweise über eine kabellose Kommunikation, möglich wird. Damit wird ein hohes Maß an Flexibilität erreicht.

An der Regelungseinheit kann ein Anschluss angebracht sein, über welchen die zweite Übersetzungseinheit mit einem Datenübertragungssystem verbunden werden kann. Es sind aber auch andere Verbindungsmöglichkeiten denkbar, beispielsweise kabellos oder aber als ein Teil der Regelungseinheit. Das Datenübertragungssystem kann außerhalb der Heizungsanlage angebracht sein. Es kann aber auch vorteilhaft sein, dieses innerhalb der Heizungsanlage anzuordnen. Damit werden Flexibilität und Bedienfreundlichkeit ermöglicht.

Es ist von Vorteil, dass zwischen dem Schlafmodus, dem stromsparenden Modus oder dem Normalmodus durch das Einschlaf- oder Aufwecksignal gewechselt werden kann. Das Einschlaf- oder Aufwecksignal kann von der Steuerungseinheit generiert werden, sobald ein Signal am Anschluss anliegt. Hierbei kann es sich um verschiedenartige Signale handeln, wie beispielsweise unterschiedlich kodierte Funksignale, ein Stromimpuls auf einer Leitung oder eine zeitlich begrenzte Abfolge von Signalen. Insgesamt ist dabei vorteilhaft, dass die Regelungseinheit auf verschiedenartige Signale reagieren kann, was einen breiten Aktionsbereich erlaubt.

Die erste Übersetzungseinheit und die Steuerungseinheit können auf einer Platine angeordnet sein, um deren Verbindung platzsparend und wirtschaftlich zu bewerkstelligen. Die Platine befindet sich geschützt im Gehäuse der Heizungsanlage und ist von außen nicht sichtbar. Dabei können die erste Übersetzungseinheit und die Steuerungseinheit als Zusatzmodule auf die Platine steckbar sein, was mehr Flexibilität bietet, beispielsweise mit Hinblick auf Erweiterungen und/oder individuelle Anpassungen.

Auch die zweite Übersetzungseinheit kann auf der Platine angeordnet sein. Hierdurch erhält man eine besonders kompakte Regelungseinheit für ein Heizsystem, mit welcher ein Fernzugriff auf die Heizungsanlage, beispielswiese über eine kabellose Kommunikation, ermöglicht wird.

Die zweite Übersetzungseinheit kann sich auch außerhalb der Platine befinden, im Gehäuse der Heizungsanlage oder auch außerhalb davon. Dies erlaubt genügend Flexibilität, um neue Heizungsanlagen oder bereits bestehende Heizungsanlagen so auszustatten, dass ein Fernzugriff auf die Heizungsanlage, beispielswiese über eine kabellose Kommunikation, möglich wird.

Es ist aus Platz- und Kostengründen vorteilhaft, wenn die erste Übersetzungseinheit, die zweite Übersetzungseinheit und/oder die Steuerungseinheit eine bauliche Einheit bilden.

Die erste Übersetzungseinheit und/oder zweite Übersetzungseinheit und/oder das Datenübertragungssystem können über eine Funktion verfügen, welche erkennt und angibt, ob ein Signal, insbesondere ein Funksignal, am Anschluss vorhanden ist oder nicht. Dieses Signal kann dann derart verarbeitet werden, dass zwischen Schlafmodus, energiesparendem Modus und Normalmodus gewechselt werden kann.

Um dem Anwender eine einfache Handhabung der Regelungseinheit des Heizsystems zu ermöglichen, kann eine Bedieneinheit vorgesehen sein, die mit der Regelungseinheit kommunizieren kann. Hierdurch können alle Funktionen der Regelungseinheit angesteuert werden; unter anderem kann auch über die Bedieneinheit das Regelungssystem in einen stromsparenden Modus versetzt und/oder in einen Normalzustand zurückversetzt werden. Die Bedieneinheit kann kabellos oder mit Kabel mit der Regelungseinheit verbunden sein. Bei einer kabellosen Verbindung ist eine Kommunikation per Funk möglich. Dadurch kann das Heizsystem aus der Ferne und/oder vor Ort über die Bedieneinheit ansteuerbar sein.

In vorteilhafter Weise weist die Regelungseinheit einen Signalgeber auf. Dieser kann beispielsweise auf der Platine angebracht sein, auf welcher sich auch die Steuerungseinheit und/oder die erste Übersetzungseinheit und/oder die zweite Übersetzungseinheit befinden, ist aber nicht darauf beschränkt. Der Signalgeber kann den Schlafmodus, den stromsparenden Modus und/oder den Normalzustand anzeigen und ist gut sichtbar angebracht, so dass der Anwender sofort erkennt, in welchem Modus sich die Regelungseinheit befindet.

Eine vorteilhafte Ausführungsform des Signalgebers kann beispielsweise eine Leuchtquelle sein, insbesondere eine Leuchtdiode oder mehrere Leuchtdioden. Auch unterschiedlich farbige Leuchtdioden sind denkbar. Diese haben den Vorteil, dass sie für den Anwender gut sichtbar sind, klar und eindeutig den Modus angeben, in welchem sich die Regelungseinheit befindet, und nur wenig Energie benötigen.

Die Erfindung betrifft auch ein Verfahren zum Steuern oder Regeln einer Regelungseinheit für ein Heizsystem. Hierbei umfasst die Regelungseinheit mindestens die Steuerungseinheit und die erste Übersetzungseinheit, wobei die Steuerungseinheit und/oder die erste Übersetzungseinheit mit der zweiten Übersetzungseinheit verbunden sein können, und wobei das Verfahren zumindest die zweite Übersetzungseinheit wenigstens bereichsweise in einen stromsparenden Modus oder in einen Normalmodus bringen kann.

Dabei ist es vorteilhaft, wenn das Verfahren das von der zweiten Übersetzungseinheit kommende und aufgearbeitete Aufwecksignal zu einem neuen Aufwecksignal verarbeiten kann, wodurch die erste Übersetzungseinheit in den Normalmodus gebracht werden kann.

Es ist ebenso von Vorteil, wenn das Verfahren das von der zweiten Übersetzungseinheit kommende und aufgearbeitete Einschlafsignal zu einem neuen Einschlafsignal verarbeiten kann, wodurch die erste Übersetzungseinheit in den stromsparenden Modus gebracht werden kann.

Falls über lange Zeit hinweg kein Signal oder eine Folge von Signalen vorhanden ist, so ist es vorteilhaft, wenn das Verfahren durch das neue Einschlafsignal die erste Übersetzungseinheit in den Schlafmodus bringen kann. Hierdurch wird eine optimale Energiebilanz erreicht.

### Zeichnung

In den Figuren ist eine schematische Darstellung einer erfindungsgemäßen Regelungseinheit für ein Heizsystem sowie eines Verfahrens zur Ansteuerung der Übersetzungseinheit zu sehen. Es zeigen
Figur 1 ein Heizsystem mit einer Regelungseinheit nach einem ersten Ausführungsbeispiel,
Figur 2 die schematische Anordnung der Steuerungseinheit, der ersten und zweiten Übersetzungseinheit auf einer Platine gemäß dem ersten Ausführungsbeispiel,
Figur 3 ein Flussdiagramm, das einen Ablauf des erfindungsgemäßen Verfahrens zeigt.

### Beschreibung der Zeichnungen

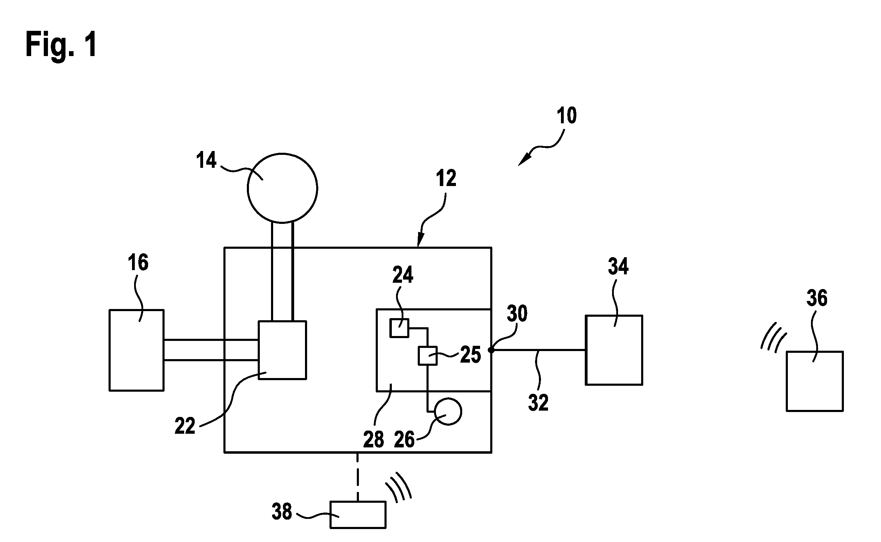

In Figur 1 ist ein Heizsystem 10 dargestellt, welches eine erfindungsgemäße Regelungseinheit 12 enthält. Ein solches Heizsystem 10 weist üblicherweise einen oder mehrere Heizkreise 14 und mindestens einen Brauchwasserkreis 16 zur Erzeugung von Brauchwasser entweder über einen Brauchwassertank oder im Durchlauferhitzerprinzip auf. Mit der Umwelt kommuniziert das Heizsystem 10 mittels Temperaturfühler und Eingabestationen, welche nicht dargestellt sind.

Zur Steuerung und/oder Regelung des Heizsystems 10 weist die Regelungseinheit 12 eine Steuereinheit 22 auf, die über nicht dargestellte Pumpen, Ventile, Relais und dergleichen auf die oben genannten Heizkreise 14 und Brauchwasserkreise 16 wirkt. Darüber hinaus enthält die Regelungseinheit 12 eine Steuerungseinheit 24 und eine erste Übersetzungseinheit 25, wobei die Steuerungseinheit 24 und/oder die erste Übersetzungseinheit 25 mit einer zweiten Übersetzungseinheit 26 verbunden sind und miteinander kommunizieren können. Dabei befindet sich die zweite Übersetzungseinheit 26 im ersten Ausführungsbeispiel innerhalb der Regelungseinheit 12. Sie kann sich aber auch außerhalb der Regelungseinheit 12 befinden (nicht dargestellt).

Eine mögliche Ausführungsform der Steuerungseinheit 24 ist ein Microcontroller. Ein Mikrocontroller stellt ein Ein-Chip-Computersystem dar, welches einen Prozessor und oft auch einen Speicher umfasst. Mit Hilfe des Prozessors können Daten verarbeitet und Befehlsdaten und -signale, beispielsweise unter Verwendung von Software-Verfahren, generiert werden, wodurch verschiedene, mit dem Microcontroller verbundene periphere Komponenten angesteuert werden können.

Die zweite Übersetzungseinheit 26 kann als ein Gateway ausgeformt sein. Ein Gateway ermöglicht die Kommunikation zwischen zwei unterschiedlichen Netzwerken mit unterschiedlichen Netzwerkprotokollen, indem es eine Konvertierung der Daten derart vornimmt, dass das Zielnetzwerk die Daten versteht und verarbeiten kann. Es bedient sich hier einer sogenannten Protokollumsetzung. Obwohl ein Gateway gewissen Standards entspricht, muss es den Umständen entsprechend angepasst werden. So wird beispielsweise in einer möglichen Ausführungsform als zweite Übersetzungseinheit 26 ein Gateway verwendet, das genau zur Regelungseinheit 12 passend konzipiert wurde, damit eine kabellose Kommunikation zwischen einem externen Netz 36 mit der Heizungsanlage möglich wird.

Im ersten Ausführungsbeispiel befinden sich die Steuerungseinheit 24, die erste Übersetzungseinheit 25 und die zweite Übersetzungseinheit 26 auf einer Platine 28 und bilden eine bauliche Einheit 23. Eine mögliche Ausführungsform der Einheit 23 ist ein IP-Modul (IP = Industry Pack). Hierbei handelt es sich um ein standardisiertes Aufsteckmodul, welches in diesem Fall mindestens zwei Pole zum Verbinden mit einer Übertragungsverbindung 33 und zwei Pole für eine Stromversorgung (nicht dargestellt) aufweist. Unter einer Übertragungsverbindung wird eine Verbindung verstanden, über welche Daten und/oder Signale von einem Gerät zum nächsten transportiert werden können. Ein IP-Modul benötigt nur sehr wenig Energie zum Betrieb.

Im ersten Ausführungsbeispiel in Figur 1 ist an der Regelungseinheit 24 ein Anschluss 30 angebracht. Dieser befindet sich beispielsweise am Gehäuse der Heizungsanlage. Eine übliche Ausführungsform des Anschlusses 30 ist ein RJ45-Stecker (RJ = Registered Jack, dt. genormte Buchse). Hierbei handelt es sich um eine Steckverbindung für Computernetzwerkkabel.

Der Anschluss 30 ermöglicht die Verbindung der zweiten Übersetzungseinheit 26 mit einem Datenübertragungssystem 34, welches sich in Figur 1 außerhalb des Gehäuses der Heizungsanlage befindet. Das Datenübertragungssystem 34 kann aber auch innerhalb des Gehäuses angebracht werden. Es verbindet mindestens zwei Netze miteinander, wodurch die Kommunikation zwischen dem Heizsystem mit einem anderen externen Netz 36, beispielsweise einem Mobiltelefon oder einem PC, ermöglicht wird. So werden Daten zwischen verschiedenen Datenübertragungssystemen unterschiedlicher Netze kabellos übertragen, beispielsweise über Funk.

Eine mögliche Ausführungsform des Datenübertragungssystems 34 ist ein Router. Bei einem Router handelt es sich um ein Koppelelement, das zwei Netze miteinander verbindet. Seine Funktionsweise unterliegt Standards und macht ihn so zu einem universellen Gerät und ermöglicht eine kabellose Kommunikation.

Der Anschluss 30 dient als Schnittstelle zwischen dem Datenübertragungssystem 34 und der Regelungseinheit 12, wobei das Datenübertragungssystem 34 und die Regelungseinheit 12 über eine Übertragungsverbindung 32 miteinander verbunden sind. Dies kann unter anderem über Kabel geschehen. Beispielsweise eignen sich hier Datenbusse. So wie das Gateway müssen Datenbusse dem vorliegenden System angepasst werden. In einem Ausführungsbeispiel wird ein speziell an die Heizungsanlage angepasster Datenbus verwendet.

Das Datenübertragungssystem 34 und die zweite Übersetzungseinheit 26, also beispielsweise der Router und das Gateway, verfügen über eine Überwachungsfunktion, über welche ermittelt wird, ob ein Signal, beispielsweise ein Funksignal, verfügbar ist oder nicht.

Auch die erste Übersetzungseinheit 25, beispielsweise ausgeführt als ein IP-Modul, verfügt unter anderem über eine Funktion, welche angibt, ob ein Signal, beispielsweise ein Funksignal, vorhanden ist oder nicht. Das IP-Modul ist hierbei mit einer Funktion ausgestattet, mit welcher das IP-Modul erkennen kann, ob ein Aufwecksignal oder ein Einschlafsignal vorhanden ist und ein entsprechendes Signal generiert, welches die Steuerungseinheit 24 zu einem neuen Aufweck- oder Einschlafsignal verarbeiten kann.

Mit der Überwachungsfunktion erkennt das Datenübertragungssystem 34, ob beispielsweise ein Funksignal, ein Impulssignal oder eine Folge von Signalen vorhanden ist oder nicht, und sendet über die Übertragungsverbindung 32 ein entsprechendes Aufweck- oder Einschlafsignal. Ist die Übertragungsverbindung 32 am Anschluss 30 angeschlossen, wird dieses Aufweck- oder Einschlafsignal weiter an die zweite Übersetzungseinheit 26 geleitet, welche mit Hilfe ihrer Überwachungsfunktion erkennt, dass ein Signal am Anschluss 30 vorhanden ist. Sie verarbeitet das Aufweck- oder Einschlafsignal und sendet es dann an die erste Übersetzungseinheit 25, welche wiederum unter Verwendung ihrer Überwachungsfunktion dieses Signal derart verarbeitet, dass es die Steuerungseinheit 24 verstehen kann. Ein auf der Steuerungseinheit 24 gespeichertes Software-Verfahren kann das einkommende Aufweck- oder Einschlafsignal nun zu einem neuen Aufweck- oder Einschlafsignal verarbeiten, welches den Wechsel in den Normalmodus oder den stromsparenden Modus oder den Schlafmodus veranlasst. Auf das Software-Verfahren wird weiter unten näher eingegangen.

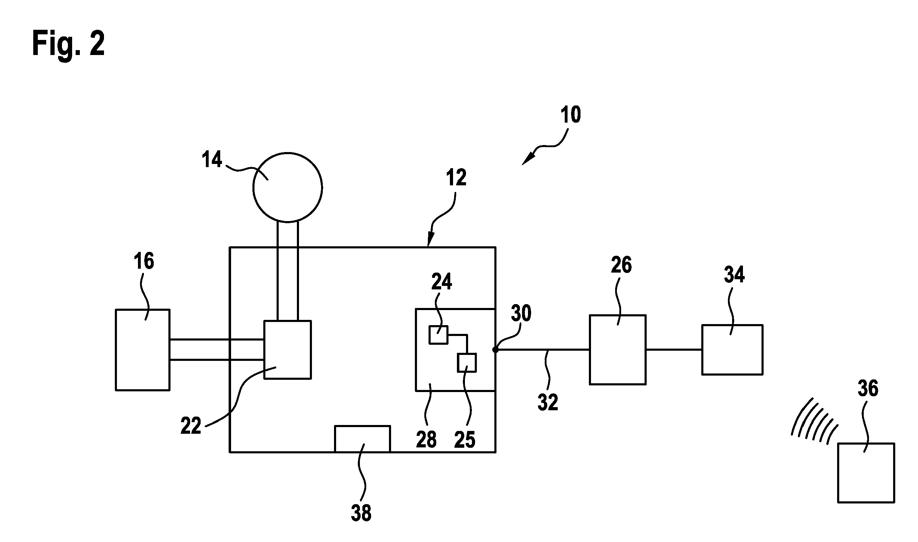

Die zweite Übersetzungseinheit 26 kann auch außerhalb der Platine 28 angebracht sein. Dies zeigt Figur 2. Dabei ist es möglich, dass sie sich innerhalb der Regelungseinheit 12 befindet oder als eigenständiges Teil außerhalb der Regelungseinheit 12 (nicht dargestellt).

Auch der Anschluss 30 befindet sich in den Ausführungsbeispielen an der Platine 28 und ist von außen gut erreichbar.

In allen Ausführungsbeispielen kann die Regelungseinheit 12 oder Teile von ihr, zumindest die zweite Übersetzungseinheit 26, wenigstens bereichsweise oder vollständig in einen stromsparenden Modus oder in einen Normalmodus gebracht werden. Auch können sich Teile der Regelungseinheit 12 in einem Schlafmodus befinden, so beispielsweise zumindest die zweite Übersetzungseinheit 26.

Die einzelnen Energiemodi unterscheiden sich unter anderem in ihrem Energieverbauch und den Funktionen, welche in dem betroffenen Teil der Regelungseinheit 12 aktiv sind. Im Normalmodus sind alle für einen einwandfreien Betrieb der Regelungseinheit 12 nötigen Funktionen aktiviert, so beispielsweise die Funktion der kabellosen Kommunikation zwischen der Regelungseinheit 12 und einem externen Netz 36. Der Normalmodus benötigt bis hin zu einer maximalen Energie, um alle Funktionen betreiben zu können. Auch wenn die Funktion der kabellosen Kommunikation nicht benötigt wird, wird sie im Normalmodus aufrecht erhalten, was sehr Energie-intensiv ist.

Im stromsparenden Modus hingegen werden die Funktionen vorübergehend deaktiviert, die für den Moment nicht benötigt werden, so beispielsweise die Möglichkeit der kabellosen Kommunikation. Wichtige Funktionen, wie beispielsweise die Aufzeichnung relevanter Daten oder die Überwachungsfunktion, bleiben aktiv. Dadurch wird ein schneller Wechsel vom stromsparenden Modus in den Normalmodus möglich, wobei Datenverlust vermieden wird. So wird im stromsparenden Modus weniger Energie verbraucht als im Normalmodus.

Im Schlafmodus sind alle Funktionen deaktiviert, die nicht benötigt werden, beispielsweise alle Funktionen, die für eine kabellose Kommunikation notwendig sind. Es findet auch keine Datenaufzeichnung statt. Damit vom Schlafmodus in den Normalmodus oder den stromsparenden Modus gewechselt werden kann, verfügt die zweite Übersetzungseinheit 26 über eine bereits oben erwähnte Überwachungsfunktion, welche sehr wenig Strom benötigt. Bei einer konkreten Ausführungsform der zweiten Übersetzungseinheit 26 handelt es sich bei dieser Überwachungsfunktion um eine getaktete Abfrage. Hierbei wird in regelmäßigen Abständen überprüft, ob ein Signal am Anschluss 30 vorhanden ist, was bedeuten würde, dass eine kabellose Kommunikation benötigt wird. Diese Taktung kann beispielsweise von einer Echtzeit-Quarzuhr gewährleistet werden, welche sehr wenig Strom benötigt. Weiter unten wird auf diese getaktete Abfrage näher eingegangen. Im Schlafmodus wird also eine minimale Energie verbraucht.

In den beiden in den Figuren 1 und 2 dargestellten Ausführungsbeispielen ist die Regelungseinheit 12 weiter mit einer Bedieneinheit 38 versehen, über welche alle Funktionen der Regelungseinheit 12 angesteuert werden können. Die Bedieneinheit 38 kann sich am Gehäuse der Heizanlage befinden oder außerhalb des Heizsystems 10. Weiter kann die Bedieneinheit 38 über eine kabellose Kommunikationsfunktion verfügen, so dass eine Ansteuerung der Regelungseinheit 12 aus der Ferne ermöglicht wird, beispielsweise von einem Mobiltelefon oder einem Computer aus. Auch über die Bedieneinheit 38 kann zwischen Schlafmodus, stromsparendem Modus und Normalmodus gewechselt werden.

Figur 2 zeigt eine schematische Darstellung eines Ausführungsbeispiels der Einheit 23 mit einer Platine 28 in der Regelungseinheit 12, auf welcher die Steuerungseinheit 24 und die erste Übersetzungseinheit 25 sowie ein Signalgeber 40 angeordnet und miteinander verbunden sind.

Der Signalgeber 40 ist von außen gut sichtbar auf der Platine 28 angebracht. Erhält die Steuerungseinheit 24 ein oder kein Signal vom Anschluss 30, so sendet sie einen entsprechenden Befehl an den Signalgeber 40. Hierdurch kann der Signalgeber 40 anzeigen, ob der Schlafmodus, der stromsparende Modus oder der Normalmodus eingestellt ist.

Eine mögliche Ausführungsform des Signalgebers 40 ist eine Leuchtdiode. Diese ist sehr langlebig bei sehr geringem Energieverbrauch. Zudem benötigt sie wenig Platz und emittiert keine Wärme, was der Sicherheit der umliegenden Teile dient.

In einer möglichen Ausführungsform kann, wie oben ausgeführt, die zweite Übersetzungseinheit 26 ein Gateway sein. Das Gateway kann durch die Steuerungseinheit 24 in einen stromsparenden Modus versetzt werden. Hierbei wird unter anderem die Taktfrequenz reduziert, beispielsweise von 48 Mhz auf 6 Mhz. Dies entspricht einer Herabsetzung um ungefähr 87,5%, wodurch sich der Stromverbrauch von 167 mA bei 7 V auf 116 mA bei 7 V reduzieren kann, was einer Stromeinsparung von ungefähr 30% entspräche.

Wie oben beschrieben kann sich das Gateway auch in einem Schlafmodus befinden. Hierbei wird die Taktfrequenz noch weiter herabgesetzt, und es steht nur die Überwachungsfunktion zur Verfügung, welche in regelmäßigen Abständen überprüft, zum Beispiel alle 2 Sekunden, ob ein Signal, beispielsweise ein Funksignal, oder eine Folge von Signalen empfangen wird oder nicht. Die Überwachungsfunktion kann mit Hilfe einer Echtzeit-Quarzuhr bewerkstelligt werden, welche beispielsweise mit ungefähr 32 kHz takten kann und daher nur sehr wenig Strom braucht. Sobald das Gateway mit Hilfe der Überwachungsfunktion ein Signal empfängt und sofern die Übertragungsverbindung 32 mit dem Anschluss 30 verbunden ist, überträgt das Gateway über die erste Übersetzungseinheit 25 zur Steuerungseinheit 24 ein Aufwecksignal. Ein Software-Verfahren in der Steuerungseinheit 24 verarbeitet das Aufwecksignal und bringt anschließend das Gateway in den Normalmodus. Das Gateway arbeitet dann mit seiner vollen Taktfrequenz, wobei nun alle Funktionen zur Verfügung stehen. Durch dieses Vorgehen kann nochmals der Stromverbrauch auf wenige mA reduziert werden.

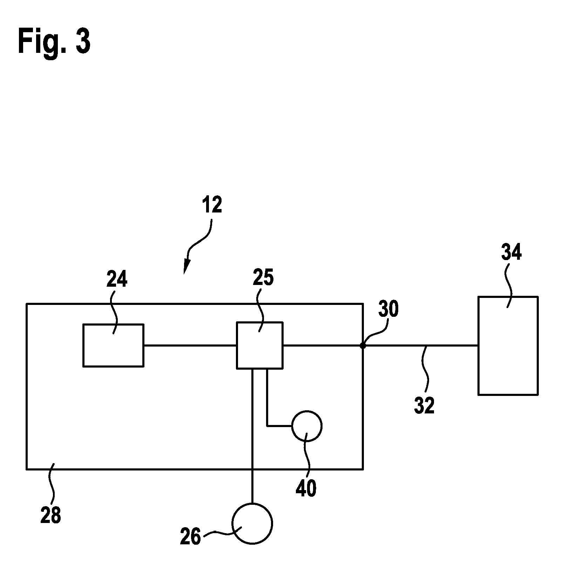

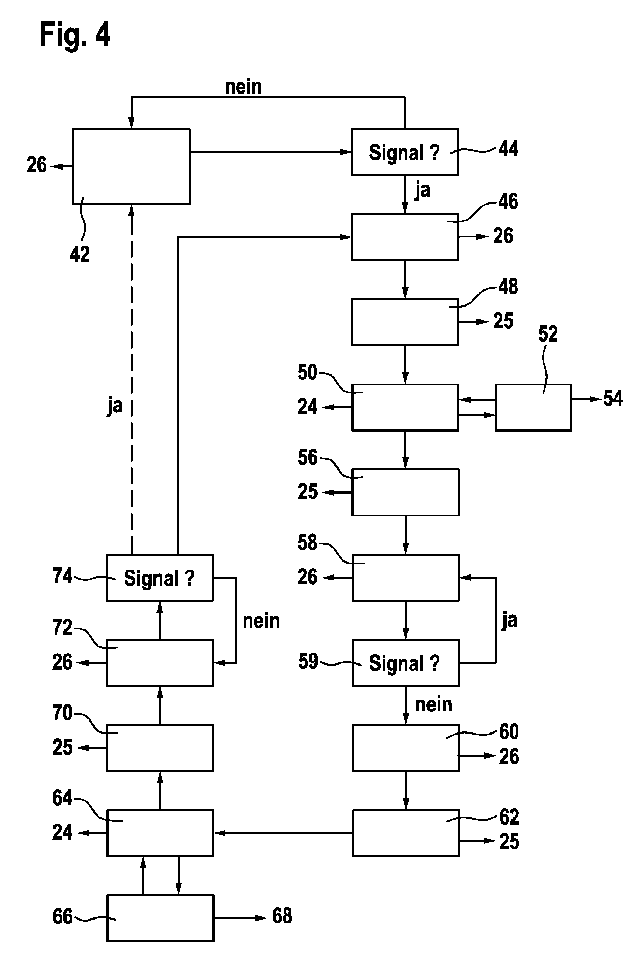

In Figur 3 ist ein Verfahren, wie es ablaufen kann, schematisch dargestellt. Das Verfahren läuft in der Steuerungseinheit 24 und erzeugt Befehle, welche in Form von Befehlssignalen von der Steuerungseinheit 24 weitergeleitet werden.

Sofern sich die zweite Übersetzungseinheit 26 in einem Schlafmodus 42 befindet, fragt die zweite Übersetzungseinheit 26 in Schritt 44 in regelmäßigen Abständen ab, ob ein Signal oder eine Folge von Signalen vorhanden ist. Wird nach der Abfrage im Schritt 44 kein Signal empfangen, bleibt die zweite Übersetzungseinheit 26 im Schlafmodus 42 und wiederholt die Abfrage in regelmäßigen Abständen.

In Schritt 42 befindet sich die zweite Übersetzungseinheit 26 im Schlafmodus. Empfängt sie nach einer Abfrage in Schritt 44 ein Signal oder eine Folge von Signalen, so generiert sie ein Aufwecksignal 46.

In Schritt 48 wird das Aufwecksignal 46 an die erste Übersetzungseinheit 25 gesendet und von dieser verarbeitet. Das verarbeitete Aufwecksignal wird in Schritt 50 an die Steuerungseinheit 24 weitergeleitet.

In Schritt 52 wird in der Steuerungseinheit 24 aus dem in Schritt 50 verarbeiteten Aufwecksignal ein neues Aufwecksignal 54 generiert, welches in Schritt 56 an die erste Übersetzungseinheit 25 geleitet wird. In Schritt 58 erreicht das neue Aufwecksignal 54 die zweite Übersetzungseinheit 26, welche dadurch in den Normalmodus gebracht wird.

In Schritt 59 erfolgt eine Abfrage, ob ein Signal oder eine Folge von Signalen empfangen wird. Die zweite Übersetzungseinheit 26 bleibt so lange im Normalmodus, wie ein Signal oder eine Folge von Signalen vorhanden ist.

Wird in Schritt 59 festgestellt, dass nach einer bestimmten Zeit kein Signal von der zweiten Übersetzungseinheit 26 empfangen wird, generiert die zweite Übersetzungseinheit 26 ein Einschlafsignal 60. In Schritt 62 wird das Einschlafsignal 60 an die erste Übersetzungseinheit 25 gesendet und dort verarbeitet. Das verarbeitete Einschlafsignal 60 wird in Schritt 64 an die Steuerungseinheit 24 übergeben.

In Schritt 66 wird in der Steuerungseinheit 24 aus dem in Schritt 64 verarbeiteten Einschlafsignal ein neues Einschlafsignal 68 generiert, welches in Schritt 70 an die erste Übersetzungseinheit 25 gesendet wird. In Schritt 72 gelangt das neue Einschlafsignal 68 zur zweiten Übersetzungseinheit 26, wodurch diese in den stromsparenden Modus gebracht wird.

Befindet sich die zweite Übersetzungseinheit 26 im stromsparenden Modus (Schritt 72), so wird in Schritt 74 überprüft, ob ein Signal oder eine Folge von Signalen vorhanden ist. Falls ein Signal empfangen wird, so wird wieder ein Aufwecksignal 46 generiert, und das Verfahren wird mit Schritt 48 fortgesetzt, wie oben beschrieben. Empfängt sie für eine bestimmte Zeit kein Signal, so bleibt sie im stromsparenden Modus.

In diesem Ausführungsbeispiel ist es vorgesehen, dass, falls über lange Zeit hinweg kein Signal empfangen wird, die zweite Übersetzungseinheit 26 vom stromsparenden Modus in den Schlafmodus des Schrittes 42 versetzt wird (in Figur 3 gestrichelt dargestellt).

## Patentansprüche

1. Regelungseinheit für ein Heizsystem (10), die mindestens eine Steuerungseinheit (24) und eine erste Übersetzungseinheit (25) umfasst, wobei die Steuerungseinheit (24) und/oder die erste Übersetzungseinheit (25) mit einer zweiten Übersetzungseinheit (26) verbunden sind, **dadurch gekennzeichnet, dass** zumindest die zweite Übersetzungseinheit (26) wenigstens bereichsweise in einen stromsparenden Modus oder in einen Normalmodus bringbar ist.

2. Regelungseinheit nach Anspruch 1, **dadurch gekennzeichnet, dass** sich die zweite Übersetzungseinheit (26) in einem Schlafmodus, dem stromsparenden Modus oder dem Normalmodus befindet, wobei die zweite Übersetzungseinheit (26) durch ein Aufweck- oder Einschlafsignal angestoßen zwischen diesen drei Modi wechseln kann.

3. Regelungseinheit nach Ansprüchen 1 oder 2, **dadurch gekennzeichnet, dass** sich die zweite Übersetzungseinheit (26) in einem Schlafmodus befindet und durch ein Aufwecksignal in den Normalmodus oder den stromsparenden Modus versetzt wird.

4. Regelungseinheit nach einem der vorhergehenden Ansprüche, **dadurch gekennzeichnet, dass** die gesamte Regelungseinheit (12) in den stromsparenden Modus oder in den Normalzustand bringbar ist.

5. Regelungseinheit nach einem der vorhergehenden Ansprüche, **dadurch gekennzeichnet, dass** die zweite Übersetzungseinheit (26) innerhalb der Regelungseinheit (12) angeordnet ist.

6. Regelungseinheit nach einem der Ansprüche 1 bis 4, **dadurch gekennzeichnet, dass** die zweite Übersetzungseinheit (26) außerhalb der Regelungseinheit (12) angeordnet ist.

7. Regelungseinheit nach einem der vorhergehenden Ansprüche, **dadurch gekennzeichnet, dass** ein Anschluss (30) an der Regelungseinheit (24) angebracht ist, über welchen die zweite Übersetzungseinheit (26) mit einem Datenübertragungssystem (34) verbindbarist, wobei das Datenübertragungssystem (34) sich innerhalb oder außerhalb des Gehäuses der Heizungsanlage befindet und mindestens zwei Netze (36) miteinander verbindet.

8. Regelungseinheit nach einem der vorhergehenden Ansprüche, **dadurch gekennzeichnet, dass** die zweite Übersetzungseinheit (26) ein Aufwecksignal generiert, falls ein Signal am Anschluss (30) anliegt.

9. Regelungseinheit nach einem der vorhergehenden Ansprüche, **dadurch gekennzeichnet, dass** die erste Übersetzungseinheit (25) und die Steuerungseinheit (24) auf einer Platine (28) angeordnet sind, wobei die erste Übersetzungseinheit (25) und die Steuerungseinheit (24) als Zusatzmodule auf die Platine (28) steckbar sind.

10. Regelungseinheit nach einem der vorhergehenden Ansprüche, **dadurch gekennzeichnet, dass** die zweite Übersetzungseinheit (26) auf der Platine (28) angeordnet ist.

11. Regelungseinheit nach einem der Ansprüche 1 bis 9, **dadurch gekennzeichnet, dass** die zweite Übersetzungseinheit (26) außerhalb der Platine (28) angeordnet ist.

12. Regelungseinheit nach einem der vorhergehenden Ansprüche, **dadurch gekennzeichnet, dass** die erste Übersetzungseinheit (25), zweite Übersetzungseinheit (26) und/oder die Steuerungseinheit (24) eine bauliche Einheit (23) bilden.

13. Regelungseinheit nach einem der vorhergehenden Ansprüche, **dadurch gekennzeichnet, dass** die erste Übersetzungseinheit (25) und/oder die zweite Übersetzungseinheit (26) und/oder das Datenübertragungssystem (34) über eine Funktion verfügen, welche erkennt und angibt, ob ein Signal, insbesondere ein Funksignal, vorhanden ist, und eine entsprechende Meldung weitergeben.

14. Regelungseinheit nach einem der vorhergehenden Ansprüche, **dadurch gekennzeichnet, dass** eine Bedieneinheit (38) vorgesehen ist, die mit der Regelungseinheit (12) kommuniziert, wobei die Bedieneinheit (38) und die Regelungseinheit (12) entweder kabellos oder mit Kabel miteinander verbunden sind.

15. Regelungseinheit nach einem der vorhergehenden Ansprüche, **dadurch gekennzeichnet, dass** ein Signalgeber (40) vorhanden ist, der den Schlafmodus, den stromsparenden Modus und/oder den Normalzustand anzeigt.

16. Verfahren zum Steuern oder Regeln einer Regelungseinheit (12) für ein Heizsystem (10), insbesondere nach einem der vorhergehenden Ansprüche, **dadurch gekennzeichnet, dass** die Regelungseinheit (12) mindestens eine Steuerungseinheit (24) und eine erste Übersetzungseinheit (25) umfasst, wobei die Steuerungseinheit (24) und/oder die erste Übersetzungseinheit (25) mit einer zweiten Übersetzungseinheit (26) verbunden sind, und wobei zumindest die zweite Übersetzungseinheit (26) wenigstens bereichsweise in einen stromsparenden Modus oder in einen Normalmodus gebracht wird.

17. Verfahren nach Anspruch 15, **dadurch gekennzeichnet, dass** ein Aufwecksignal (46) von der zweiten Übersetzungseinheit (26) an die Steuerungseinheit (24) übertragen wird und in der Steuerungseinheit (24) ein neues Aufwecksignal (54) generiert wird, wodurch die erste Übersetzungseinheit (25) in den Normalmodus gebracht wird.

18. Verfahren nach Anspruch 15 oder 16, **dadurch gekennzeichnet, dass** ein Einschlafsignal (60) von der zweiten Übersetzungseinheit (26) an die Steuerungseinheit (24) übertragen wird und in der Steuerungseinheit (24) ein neues Einschlafsignal (68) generiert wird, wodurch die erste Übersetzungseinheit (25) in den stromsparenden Modus gebracht wird.

19. Verfahren nach einem der Ansprüche 15 bis 17, **dadurch gekennzeichnet, dass**, falls über lange Zeit hinweg kein Signal vorhanden ist, durch das neue Einschlafsignal (68) die erste Übersetzungseinheit (25) in den Schlafmodus gebracht wird.
